# EUROPÄISCHE PATENTANMELDUNG

(11) **EP 1 277 878 A1**
(43) Veröffentlichungstag der Anmeldung: **22.01.2003**
(21) Anmeldenummer: 02007972.9
(22) Anmeldetag: 10.04.2002
(51) Int. Cl.: D21B 1/32

(54) **Verfahren zur Aufbereitung von Trockenausschuss**

(30) Priorität: 21.07.2001 DE 10135699
(71) Anmelder: Voith Paper Patent GmbH, 89522 Heidenheim (DE)
(72) Erfinder: Mannes, Wolfgang, 88213 Ravensburg-Bavendorf (DE); Kohrs, Manfred, 88214 Ravensburg (DE)

(57) **Zusammenfassung**

Das Verfahren dient zur Aufbereitung von Trockenausschuss (1) einer Papier-, Karton- oder Streichmaschine. Erfindungsgemäß wird dieser durch mechanische Bearbeitung z. B. in einem Kneter (3) so dispergiert, dass die darin enthaltenen Füllstoff/Strichpartikel zerkleinert werden. Vorzugsweise erfolgt das ohne vorherige Fraktionierung oder Eindickung des Trockenausschusses.

## Beschreibung

Die Erfindung betrifft Verfahren zur Aufbereitung von Trockenausschuss einer Papier-, Karton- oder Streichmaschine gemäß dem Oberbegriff des Anspruchs 1.

Bekanntlich können bei einer Papier- oder Kartonmaschine Betriebszustände auftreten, bei denen während der Papierproduktion das erzeugte Papier nicht als fertige Bahn aufgewickelt werden kann, sondern bereits vorher aus dem Bereich der Papiermaschine als sogenannter Ausschuss abgeführt werden muss. Ähnliches kann auch an Streichmaschinen geschehen, bei denen das bereits erzeugte und getrocknete Papier mit einer als Strich bezeichneten Schicht versehen wird. Auch bei störungsfreiem Betrieb fällt in Form von Randstreifen ständig Material an, das wieder aufgelöst und dem Papiererzeugungsprozess wieder zugeführt werden muss. Große Mengen von Trockenausschuss können auch beim Aufwickeln entstehen oder dadurch dass bestimmte Qualitätsanforderungen des fertigen Papiers nicht erreicht wurden. Das als Ausschuss vorliegende Material enthält in der Regel qualitativ hochwertige Fasern und ist sortenrein. Es wird üblicherweise zerkleinert und mit Wasser suspendiert.

Trockenausschuss ist in der Regel nur sehr wenig verschmutzt und sortenrein. Aus diesen Gründen steht im Stand der Technik die mechanische Zerkleinerung der bereits verfestigten Papierbahn sowie ihre Suspension in Wasser im Vordergrund der Verfahren zu ihrer Wiederaufbereitung. Neben der eigentlichen Papierfaser enthält Trockenausschuss auch relativ viele mineralische Füllstoffe. Wird Trockenausschuss aus gestrichenem Papier aufgelöst, stammen sie zu einem beträchtlichen Anteil aus dem als Streichmasse aufgetragenen Stoff. Im Allgemeinen sollen diese Füllstoffe zur Papiererzeugung wieder eingesetzt werden. Daher können sie zumindest teilweise im rezirkulierten Ausschuss verbleiben. Die auf diese Weise gewonnene Suspension wird dann in die Maschinenbütte geführt, aus der Stoff zur Erzeugung dieser Papiersorte wieder entnommen wird.

Aus der EP 0 711 369 B1 ist ein Verfahren bekannt, bei dem füllstoffhaltiges Papier-Material in mehreren Stufen aufwendig fraktioniert wird, um die Füllstoffe aufzukonzentrieren. Anschließend werden sie dispergiert und zumindest teilweise wiederverwendet.

Die DE 19532301 A1 beschreibt ein Verfahren, bei dem gestrichener Trockenausschuss zunächst aufgelöst und eventuell gereinigt und entstippt wird. Nach erneuter Eindickung wird in einer bestimmten Ausführungsform des Verfahrens ebenfalls dispergiert. Das Verfahren ist aufwendig und im Wesentlichen auf die Behandlung der beim Eindicken anfallenden Filtrate gerichtet.

Es ist Aufgabe der Erfindung, ein Verfahren zu schaffen, mit dem es gelingt, die Aufbereitung des Trockenausschusses ohne zu hohen Aufwand durchzuführen und dabei Probleme, die sich durch die reichlich vorhandenen Füllstoffe, insbesondere Streichfarben, ergeben könnten, zu vermeiden.

Diese Aufgabe wird durch die kennzeichnenden Maßnahmen des Anspruchs 1 in vollem Umfang gelöst.

Besonders vorteilhaft ist die Möglichkeit, den anfallenden Trockenausschuss gesamthaft mit hohen Scherkräften bearbeiten zu können. Dessen Konsistenz ist von vorn herein schon hoch genug, und seine Schmutzfracht minimal. Aufwendige Fraktionierschritte, die eine Verdünnung voraussetzen, können also entfallen und damit auch eine nachfolgende Eindickung. Die hohen Scherkräfte sind zumeist auch für die Behandlung der im Trockenausschuss enthaltenen Fasern von Nutzen, da sie Stippen auflösen und die Faseroberfläche aktivieren, also die Wiederverwendung optimal vorbereiten.

Die Erfindung und ihre Vorteile wird beschrieben anhand von Zeichnungen. Dabei zeigen:
- Fig. 1 und 2: Verfahrensschemata von 2 verschiedenen Ausführungsmöglichkeiten der Erfindung;
- Fig. 3: eine für das Verfahren gut geeignete Auflösetrommel
- Fig. 4: eine weitere Verfahrensvariante

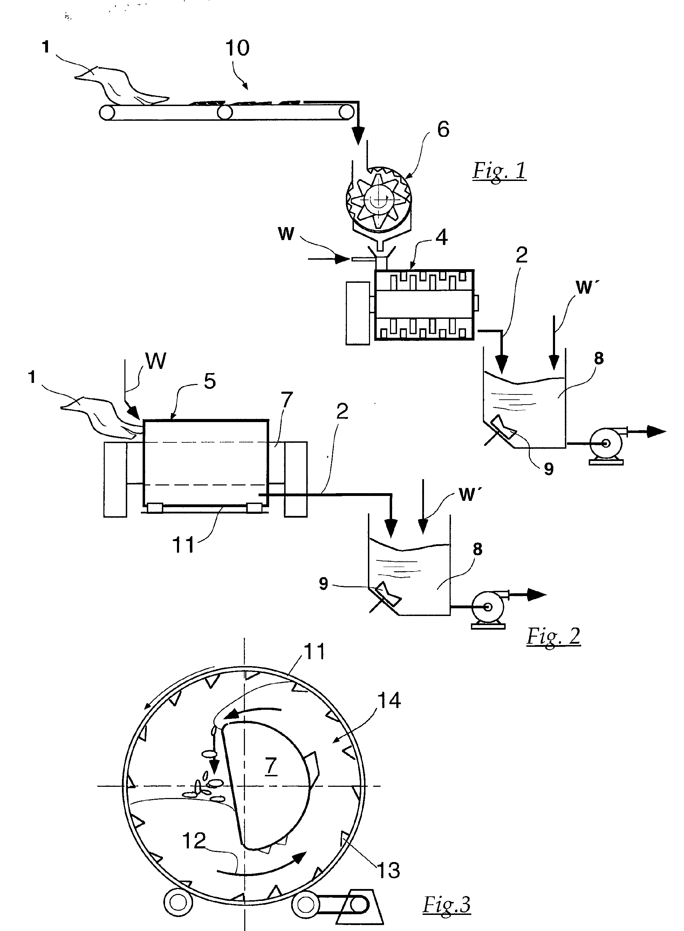

Im in Fig. 1 dargestellten Verfahrensschema erkennt man, dass der Trockenausschuss 1 zunächst über ein Transportsystem 10 aus dem Bereich der Anfallstelle, z.B. einer - nicht gezeigten - Papiermaschine entfernt wird. Fällt er in großen Bahnen an, kann es zweckmäßig sein, ihn in einem Shredder 6 so weit vorzuzerkleinern, dass er sich in einen Kneter 3 eintragen lässt. Durch Zugabe (Aufsprühen und/oder Einspritzen) von Wasser W wird er auf eine Konsistenz zwischen 15 und 60% , vorzugsweise 25 bis 35% Trockengehalt gebracht. Dann lassen sich die benötigten Scherkräfte übertragen. Als Vorrichtung dazu dient hier ein Kneter 3, bei dem bekanntlich Knetwerkzeuge in einem bestimmten Abstand aneinander vorbeibewegt werden. Hohe Temperaturen über 60 Grad C sind normalerweise für diesen Zweck nicht erforderlich. Ein geeigneter Kneter ist der an sich bekannte Einwellenzerfaserer mit Knetwerkzeugen, die in einem Abstand von mindestens 10 mm und mit einer Geschwindigkeit von höchstens 15 m/sec relativ zueinander bewegt werden. Es sind aber auch schnelllaufende Scheibendisperger denkbar, die vorzugsweise mit einer Konsistenz von 15 bis 50% betrieben werden und an ihrer Peripherie Relativgeschwindigkeit um 40 m/s und mehr erreichen.

Durch intensive Faser-Faser-Reibung werden Scherkräfte erzeugt, die groß genug sind, um die Füllstoffpartikel aufzubrechen und in feine Bruchstücke zu zerkleinern. Es wird ein Feinheitsgrad erreicht, der für das später daraus hergestellte Papier erforderlich ist. Im allgemeinen ist das eine Korngröße von höchstens 60 möglichst nicht über 40 Mikrometer.

Fig. 2 zeigt eine andere Form des erfindungsgemäßen Verfahrens, bei der, im Gegensatz zu Fig. 1, der die Scherkräfte erzeugende Apparat eine Auflösetrommel 5 ist. Diese kann mit Vorteil einen stillstehenden Verdränger aufweisen. Eine solche Trommel ist in Fig. 3 schematisch dargestellt, und zwar im Schnitt mit axialer Blickrichtung. Man erkennt den rotierenden (Pfeil 12) Trommelkörper 11, der z.B. mit Mitnehmerleisten 13 an seiner Innenkontur versehen ist und in dessen Zentrum sich der Verdrängerkörper 7 befindet. Dieser Verdrängerkörper 7 kann z.B. den Querschnitt eines Halbkreises haben oder eine diesem ähnliche Form. Zwischen der bauchigen Seite des Verdrängerkörpers 7 und der Innenkontur des Trommelkörpers 11 bildet sich der Bearbeitungskanal 14. Ein solcher Bearbeitungskanal ist besonders gut geeignet zur Verstärkung der Scherkräfte. Eine Auflösetrommel ist auch im wechselhaften Betrieb sehr unempfindlich und in der Regel leichter mit trockenen Papierbahnen oder -Rollen zu beschicken als z.B. ein Kneter oder Scheibendisperger. Evt. könnte aber auch hier ein vorgeschalteter Shredder notwendig sein.

Der durch die beschriebene mechanische Bearbeitung dispergierte Stoff 2 wird mit weiterem Wasser W' verdünnt, wozu ein Rührer 9 verwendet werden kann. Er steht dann als Vorrat 8 für den Konstanten Teil der Papiermaschine bereit.

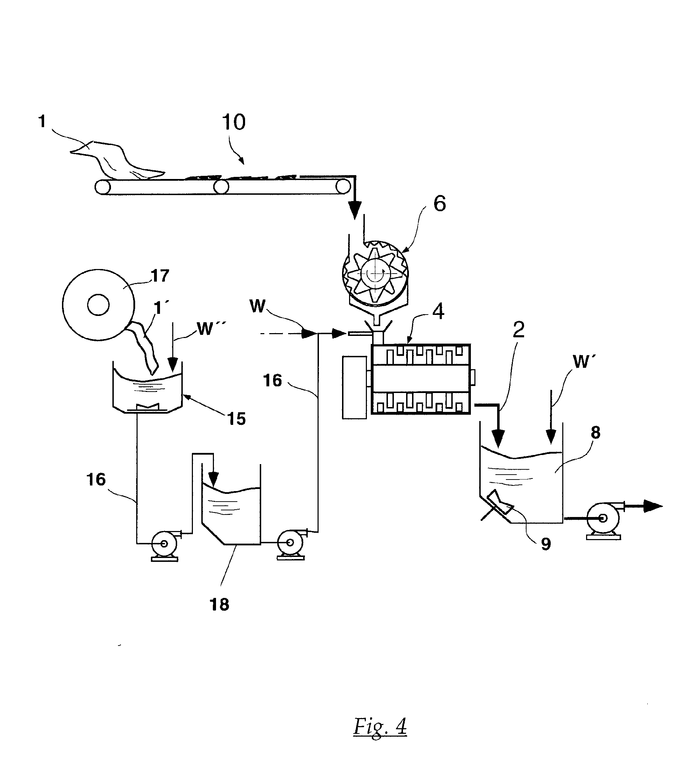

Um die zur Auflösung geeignete Konsistenz zu erreichen, kann dem Trockenausschuss, wie bereits beschrieben, Wasser zugeführt werden. Im Allgemeinen nimmt man dazu aufbereitetes Rückwasser von der Papiermaschine. Geeignet ist aber auch eine faserhaltige Suspension, z.B. wie sie bei der Auflösung von Trockenausschuss gebildet wird. Das kann einen besonderen Vorteil haben, wie die Fig.4 zeigt:

Ein Teil 1' des Trockenausschusses fällt unter der nur symbolisch gezeichneten Papiermaschine 17 an. Dort ist eine sofortige Auflösung erwünscht, um einen längeren Trockentransport in diesem engen Teil der Papiermaschine zu vermeiden. Über den Geamtzeitraum gesehen, ist die Menge dieses Teils 1' sehr viel weniger als die des aus den übrigen Ausschussquellen stammenden. Das gilt auch, wenn bei - seltenen - Bahnabrissen unter der Papiermaschine in kurzer Zeit ein großer Trockenausschuss gebildet wird. Die durch Auflösung dieses Teils 1' mit Wasser W" im Auflöser 15 gebildete Suspension 16 kann in einer Büttenvorlage 18 gesammelt und dann direkt zur Verdünnung vor oder bei der erwähnten mechanischen Bearbeitung des noch nicht aufgelösten Trockenausschusses 1 eingesetzt werden, so dass auch dieser Teil 1' gemäß dem Verfahren besonders vorteilhaft aufbereitet wird. Selbst dann, wenn der Teil 1' mengenmäßig so groß sein sollte, dass er vor der Zugabe in den Kneter o.ä. eingedickt werden muss, um dort eine ausreichend hohe Konsistenz zu erhalten, würde die dazu benötigte Apparatur beträchtlich kleiner sein als zur Eindickung des gesamten (aufgelösten) Trockenausschusses.

## Patentansprüche

1. Verfahren zur Aufbereitung von Trockenausschuss (1,1') einer Papier-, Karton- oder Streichmaschine,
**dadurch gekennzeichnet,**
**dass** der Trockenausschuss (1,1') bei einer Konsistenz von mindestens 15% und höchstens 60% aufgelöst und dabei durch Scherkräfte mechanisch so bearbeitet wird, dass dadurch die darin enthaltenen Füllstoffpartikel zerkleinert werden.

2. Verfahren nach Anspruch 1,
**dadurch gekennzeichnet,**
**dass** die Scherkräfte in einem Kneter (3) auf den Trockenausschuss (1,1') übertragen werden

3. Verfahren nach Anspruch 2,
**dadurch gekennzeichnet,**
**dass** als Kneter (3) ein Einwellenzerfaserer bei einem Feststoffgehalt zwischen 20 % und 50 % betrieben wird.

4. Verfahren nach Anspruch 3,
**dadurch gekennzeichnet,**
**dass** der Einwellenzerfaserer mit Knetwerkzeugen betrieben wird, die in einem Abstand von mindestens 10 mm mit einer Geschwindigkeit von höchstens 15 m/sec relativ zueinander bewegt werden.

5. Verfahren nach Anspruch 1,
**dadurch gekennzeichnet,**
**dass** die Scherkräfte in einer Auflösetrommel (4) bei einem Feststoffgehalt zwischen 20 % und 50 % auf den Trockenausschuss (1,1') übertragen werden.

6. Verfahren nach Anspruch 1,
**dadurch gekennzeichnet,**
**dass** die Scherkräfte in einem schnelllaufenden Scheibendisperger bei einem Feststoffgehalt zwischen 20 % und 50 % auf den Trockenausschuss (1,1') übertragen werden

7. Verfahren nach einem der voranstehenden Ansprüche,
**dadurch gekennzeichnet,**
**dass** die Scherkräfte bei einer Stofftemperatur unter 60 Grad C erzeugt werden.

8. Verfahren nach einem der voranstehenden Ansprüche,
**dadurch gekennzeichnet,**
**dass** bei der Auflösung eine spezifische Arbeit von mindestens 80 kWh/t auf den Stoff übertragen wird.

9. Verfahren nach einem der voranstehenden Ansprüche,
**dadurch gekennzeichnet,**
**dass** der anfallende Trockenausschuss (1,1') zum überwiegenden Teil aus gestrichenen Papieren besteht und dass die Streichfarben Agglomerate bilden, die bei der Wiederverwendung des Trockenausschusses zur Papiererzeugung stören.

10. Verfahren nach einem der voranstehenden Ansprüche,
**dadurch gekennzeichnet,**
**dass** der anfallende Trockenausschuss (1,1') in den die mechanische Bearbeitung ausführenden Apparat ohne vorherige Abscheidung von Fasern eingeführt wird.

11. Verfahren nach einem der voranstehenden Ansprüche,
**dadurch gekennzeichnet,**
**dass** der Trockenausschuss (1,1') in den die mechanische Bearbeitung ausführenden Apparat ohne vorherige Eindickung eingeführt wird.

12. Verfahren nach einem der voranstehenden Ansprüche,
**dadurch gekennzeichnet,**
**dass** ein Teil (1') des Trockenausschusses zu einer pumpfähigen Suspension (16) aufgelöst und dass diese Suspension zur Verdünnung des noch nicht aufgelösten Trockenausschusses (1) verwendet wird und dass anschließend beide Mengen gemeinsam unter Anwendung der die Füllstoffpartikel zerkleinernden Scherkräfte aufgelöst werden.

13. Verfahren nach Anspruch 12,
**dadurch gekennzeichnet,**
**dass** die Auflösung des Teils (1') des Trockenausschusses in einem in unmittelbarer Nähe einer Papiermaschine, vorzugsweise darunter aufgestellten Auflöser (15) durchgeführt wird.

14. Verfahren nach Anspruch 12 oder 13,
**dadurch gekennzeichnet,**
**dass** die pumpfähige Suspension (16) in einer Vorlagebütte (18) bevorratet wird.

15. Verfahren nach Anspruch 12, 13 oder 14,
**dadurch gekennzeichnet,**
**dass** die pumpfähige Suspension (16) in einer Konsistenz zwischen 4 und 10 % hergestellt wird.
